# EUROPEAN PATENT APPLICATION

(11) **EP 4 019 650 A1**
(43) Date of publication of application: **29.06.2022**
(21) Application number: 20855427.9
(22) Date of filing: 19.08.2020
(51) Int. Cl.: C21D 1/00, B21B 1/38, B21B 38/00, B21B 45/02, B21C 51/00

(54) **MANUFACTURING FACILITY AND MANUFACTURING METHOD FOR THICK STEEL PLATE**

(30) Priority: 21.08.2019 JP 2019151062
(71) Applicant: JFE Steel Corporation, Tokyo 100-0011 (JP)
(72) Inventor: NOJIMA, Yusuke, Tokyo 100-0011 (JP); UEOKA, Satoshi, Tokyo 100-0011 (JP); TAMURA, Yuta, Tokyo 100-0011 (JP); HIRANO, Takahiro, Tokyo 100-0011 (JP); MIURA, Ken, Tokyo 100-0011 (JP); KUMANO, Ori, Tokyo 100-0011 (JP)
(74) Representative: Haseltine Lake Kempner LLP
(86) International application number: PCT/JP2020/031314
(87) International publication number: WO 2021/033723

(57) **Abstract**

There are provided a manufacturing facility and a manufacturing method for a steel plate capable of precisely managing first-stage rapid cooling and second-stage rapid cooling when the steel plate is rapidly cooled in two stages. In the manufacturing facility (1) for the steel plate, a cooling apparatus (3) includes a rapid cooling area (4) having a first rapid cooling zone (5) in which a steel plate (S) extracted from a furnace (2) is rapidly cooled, an air-cooling zone (6) in which the steel plate (S) is air-cooled, and a second rapid cooling zone (7) in which the air-cooled steel plate (S) is rapidly cooled. In the rapid cooling area (4), at least one radiation thermometer (11a) and (11b) provided on one side or both sides of an upper side and a lower side of the steel plate (S) is arranged side by side along a conveyance direction of the steel plate S in zones including the air-cooling zone (6). The temperature (s) of one or both of an upper surface and a lower surface of the steel plate (S) is measured by the radiation thermometer(s) (11a) and (11b) arranged in the air-cooling zone (6).

## Description

### Technical Field

The present invention relates to a manufacturing facility and a manufacturing method for a steel plate.

### Background Art

In recent years, with the increase in size of a building structure, the high strength of steel materials to be used is required. At the same time, from the viewpoint of safety, it is also required to have a high allowable stress and to reduce a yield ratio that is a ratio of a yield strength to a tensile strength. When a yield ratio is reduced, stress and uniform elongation to be allowed before breaking are increased even if a stress not less than a yield point is added, and thus the steel materials become materials suitable for a building structure and excellent in plastic deformability.

The basic technical concept of manufacturing low yield ratio steel is to make a multi-phase structure of a ferrite phase and a bainite or martensite phase to lower a yield ratio . In other words, it is to keep a yield stress low by a soft ferrite phase and to obtain a high tensile strength by a hard bainite or martensite phase.

The multi-phase structure is commonly obtained by mainly controlling cooling, especially controlling accelerated cooling immediately after hot rolling. More specifically, accelerated cooling is divided into two stages of previous-stage slow cooling and subsequent-stage rapid cooling to sufficiently grow a soft ferrite phase in the previous-stage slow cooling and to obtain a hard bainite or martensite phase in the subsequent-stage rapid cooling.

For example, PTL 1 discloses a manufacturing method for a steel pipe of which a yield ratio is low and weldability is high, which is composed of a multi-phase structure that includes a soft ferrite phase and a hard bainite or martensite phase. In the manufacturing method for a low yield ratio welded steel pipe disclosed in PTL 1, accelerated cooling is performed on a steel plate immediately after hot rolling in two stages of previous-stage cooling in which slow cooling is performed until a temperature of the steel plate reaches around 600°C and subsequent-stage cooling in which rapid cooling is performed up to a winding temperature after that. By doing so, it is to sufficiently grow the soft ferrite phase in the previous-stage slow cooling and to obtain the hard bainite or martensite phase in the subsequent-stage rapid cooling. Assuming that a wall thickness is "t" and an outer diameter of a steel pipe is "D" in a state where a steel plate is welded to be the steel pipe by the manufacturing method, a low yield ratio welded steel pipe is obtained, which satisfies a yield ratio ≤ 80% in case of t/D ≤ 2, a yield ratio ≤ 85% in case of 2 < t/D ≤ 3, and a yield ratio ≤ 88% in case of t/D > 3.

Recently, as a demand for ensuring earthquake resistance of a building structure is further increased, a steel material having a tensile strength further higher than the conventional one is required. In the conventional multi-phase structure of a soft ferrite phase and a hard bainite or martensite phase, because it is hard to stably obtain a high tensile strength especially in the soft ferrite phase of a surface layer, it is not possible to satisfy high tensile strength that is required recently.

Additionally, for the sake of the improvement of construction efficiency and the reduction of cost of a structural object, the improvement of weld efficiency and the expansion of applicable scope of high heat input welding of a steel material are required. To keep high toughness even when performing the high heat input welding, it is necessary to suppress the growth of austenite grains in a heat-affected zone of a welded part and it is necessary to set a component composition of alloy to an appropriate range. Therefore, it is difficult to achieve high strength by adding a large amount of alloy components.

To achieve this request, there is disclosed a technology for achieving high tension by employing a multi-phase structure of a bainite phase and an island martensite phase. In the manufacturing method, in cooling divided into two stages, it is characterized by the fact that a micro structure is made by limiting a cooling stop temperature at each stage as well as by especially limiting a second-stage cooling start temperature and a range of a cooling rate at each stage.

In a manufacturing method for a non-refined low-yield-ratio high-tension steel plate disclosed in PTL 2, after hot rolling, the first cooling is to start cooling from a temperature not less than the Ar3 transformation point in case of a surface temperature of the steel plate. Then, there is performed accelerated cooling in which cooling is performed at a cooling rate of the surface not less than 50°C/s and is stopped at a surface temperature not less than (Bs-150)°C and not more than (Bs-30)°C and further at a temperature at 1/2 position of the plate thickness not less than the Ar3 transformation point. After the first cooling stop, the surface temperature is raised to be not less than 30°C from the cooling stop and is reheated up to a temperature not more than Bs. Next, the second cooling is to, at an average cooling rate not less than 10°C/s at 1/2 position of the plate thickness, cool the 1/2 position temperature from not less than Ms to not more than 600°C.

A manufacturing method for a low-yield-ratio high-tension steel plate disclosed in PTL 3 includes a hot rolling step, in which a steel material having a predetermined component composition is hot-rolled to be a steel plate, a reheating step, a first water cooling step, an air-cooling step, and a second water cooling step. The reheating step is to reheat the steel plate up to a reheating temperature of 900 to 1000°C and to hold it at the reheating temperature for ten minutes or more. The first water cooling step is to cool the steel plate after the reheating step from a cooling start temperature not less than the Ar3 transformation point to a cooling stop temperature of 400 to 550°C at an average cooling rate of 1 to 200°C/s at 1/4 position of the plate thickness. The air-cooling step is to air-cool the steel plate after the first water cooling step for 30 to 300 seconds . The second water cooling step is to cool the steel plate after the air-cooling step up to a cooling stop temperature not more than 300°C at the average cooling rate of 1 to 200°C/s at 1/4 position of the plate thickness.

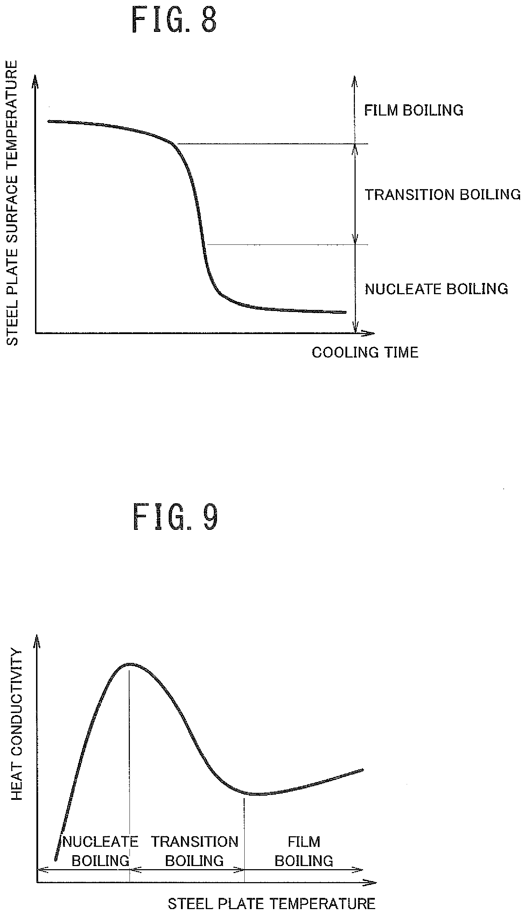

Herein, FIG. 8 illustrates an example of a temperature history in a high-temperature steel plate water cooling process. In the initial stage of water cooling, a steel plate is cooled in a film boiling state where a steam film is between water and the steel plate. Because the steel plate does not directly contact water in the film boiling state, a heat transfer coefficient that is an index of cooling capacity is low. However, when a steel plate surface temperature reaches around 700 to 500°C, it is difficult to maintain the steam film between water and the steel plate, and thus the steel plate is cooled in a transition boiling state where the steel plate partially contacts water. Once solid-liquid contact occurs, the flow of water near the steel plate becomes intense and the heat transfer coefficient is suddenly raised, due to evaporation of water in contact with the steel plate. As a result, while keeping a high heat transfer coefficient , the state transfers to a nucleate boiling state where the contact between the steel plate and water constantly occurs, and the temperature of the steel plate sharply decreases to near a water temperature.

The steel plate temperature and the heat transfer coefficient have an N-shaped curve relationship as illustrated in FIG. 9. Because the steel plate temperature and the heat transfer coefficient have a positive correlation in a film boiling region and a nucleate boiling region, a portion having the high steel plate temperature is strongly cooled and a portion having the low steel plate temperature is weakly cooled. Therefore, when a steel plate having a temperature deviation is cooled in the regions, the temperature deviation is gradually reduced. On the other hand, because the steel plate temperature and the heat transfer coefficient have a negative correlation in a transition boiling region, a portion having the high steel plate temperature is weakly cooled and a portion having the low steel plate temperature is strongly cooled. Therefore, once there is a temperature deviation in the steel plate, the temperature deviation gradually increases.

To manufacture a homogeneous steel plate over the whole surface, it is most important to uniformly cool the whole surface of the steel plate. For that reason, a steel plate cooling apparatus commonly performs cooling by using the nucleate boiling region and the film boiling region in which the steel plate temperature and the heat transfer coefficient have a positive correlation.

Referring to again the relationship between the steel plate temperature and the heat transfer coefficient illustrated in FIG. 9, it turns out that the heat transfer coefficient is larger in the nucleate boiling region than in the film boiling region. Furthermore, even if any cooling style is taken, the steel plate cannot be cooled to near water temperature in only the film boiling region, and the state eventually transfers to the unstable transition boiling region by boiling transition. For that reason, in a step of requiring rapid cooling, it is common to use cooling by nucleate boiling.

It is known that the nucleate boiling is easier to occur and the cooling heat transfer coefficient is higher as a cooling water amount is greater. Therefore, in a rapid cooling process such as direct quenching immediately after hot rolling and quenching in the heat treatment facility, it is common to blow a large amount of cooling water to the steel plate and cool it in the nucleate boiling state having the high cooling rate to manufacture the steel plate. Because a manufacturing process for the low-yield-ratio high-tension steel described in PTLs 1 to 3, especially a second-stage rapid cooling process to obtain a martensite phase also requires a high cooling rate, the same cooling is obtained.

Herein, quenching means a manufacturing method for a high-strength steel plate of rapidly cooling, up to the Ms point or less in a cooling apparatus, the steel plate kept above the Ac3 transformation point after hot rolling and the steel plate again heated to the Ac3 transformation point or higher by a furnace etc. after cooling is performed after rolling. Moreover, quenching the steel plate after rolling without cooling and reheating is especially referred to as direct quenching. The direct quenching is performed by an online cooling apparatus to be described later. Moreover, the heat treatment facility is a facility including a furnace and a cooling apparatus located at places different from a rolling line, and is mainly used for quenching a steel plate cooled after hot rolling. The heat treatment facility is also referred to as an offline heat treatment facility to be described later.

Meanwhile, the high-rise of buildings is progressing recently. A low-yield-ratio high-tension steel used for the structure of these superhigh-rise buildings secures the elastic rigidity and yield resistance of a beam-column connection by conspicuously thickening its plate thickness. Cooling such a conspicuously steel plate needs a long cooling time from a few minutes to a dozen minutes even if cooling is performed in the nucleate boiling state having a high cooling rate.

Because cooling is performed until the steel plate temperature reaches room temperature in the case of quenching, it is possible to secure an adequate cooling time by making a steel plate stay inside the cooling apparatus even when the steel plate whose plate thickness is conspicuously thick is cooled.

On the other hand, high value-added steel such as low-yield-ratio high-tension steel makes an internal structure in many cases by stopping cooling the steel plate at around 700 to 300°C. The cooling stop control of the steel plate is realized by, for example, a method described in PTL 4. In other words, the method is to previously evaluate cooling capacity of each cooling header, to calculate a temperature and calculate a cooling time based on the cooling capacity of the header to stop cooling at a required stop temperature, and to set a conveyance speed of the steel plate to match the cooling time. For that reason, the steel plate accompanied by cooling stop is commonly performed by pass cooling in which the steel plate does not stay inside the cooling apparatus.

When wide retreat spaces are on the incoming side and the outgoing side of the cooling apparatus, two-stage cooling can be performed by once driving out the steel plate for which the first-stage cooling is completed to the outgoing side of the cooling apparatus, and then by running the steel plate backwards to perform the second-stage cooling and driving out it to the incoming side of the cooling apparatus. However, when there are incidental facilities such as a furnace just before the cooling apparatus, because the second-stage cooling by a reverse run cannot be performed, both the first-state cooling and second-stage cooling are required to be performed without a reverse run.

Because the facility length of the steel plate cooling apparatus is commonly around 10 to 20 m, it is necessary to set a conveyance speed to a conspicuously low speed about several m/min to secure a sufficient cooling time, when cooling low-yield-ratio high-tension steel having thick plate thickness.

The cooling of the steel plate may be performed by an online cooling apparatus or an offline heat treatment facility. The online cooling apparatus is arranged in the rear of a rolling mill on a rolling line to directly cool a steel plate after rolling. The offline heat treatment facility is arranged in the rear of a furnace located at a different place from the rolling line to cool a steel plate reheated by the furnace.

The online cooling apparatus is common to restrain a steel plate by a plurality of restraint roll pairs in a vertical pair and to cool it through the plate, like a technology described in PTL 5. On this occasion, because cooling zones are separated by pairs of restraint rolls, a steel plate temperature history satisfying the requirements is realized by adjusting a cooling water amount between the pairs of restraint rolls and appropriately setting a conveyance speed of the steel plate. As an example, PTL 6 discloses a technology of performing weak cooling in a previous stage of cooling and then performing strong cooling in a subsequent stage of cooling. As described above, an online cooling apparatus is preferable as a water cooling apparatus configured to control precise cooling start/cooling stop temperatures and cooling rate required for low-yield-ratio high-tension steel.

However, when using the online cooling apparatus, a cooling time from immediately after rolling to the start of cooling is longer at the tail of the steel plate than the tip of the steel plate. Therefore, because the tail of the steel plate is cooled extra by a cooling time difference even when the steel plate temperature after rolling is uniform, a difference in the cooling start temperature between the tip and tail of the steel plate occurs and thus a steel plate having homogeneous characteristics especially in the longitudinal direction of the steel plate cannot be obtained. The cooling time difference between the tip and tail of the steel plate increases more as its conveyance speed is lower. When manufacturing a conspicuously steel plate, the cooling time difference between the tip and tail of the steel plate can be reduced by using the offline heat treatment facility in which the furnace and the cooling apparatus are close to each other.

The offline heat treatment facility is mostly used for quenching. For that reason, the facility is configured to include a high quench zone in which a large flow rate of water can be flowed to have a high cooling rate and a low quench zone in which water enough to prevent reheating from the inside is blown. Although the roll pairs restraining the steel plate are attached up and down, the facility is common not to have a function for adjusting a cooling water amount between each roll pair like the online cooling apparatus.

As described above, when manufacturing low-yield-ratio high-tension steel having a conspicuously thicker plate thickness than the conventional one, it is necessary to lower a conveyance speed to sufficiently take a cooling time. For that reason, the offline heat treatment facility that can secure a cooling start temperature at the tip and tail of the steel plate must be employed even in such a case.

However, because cooling start/cooling stop temperatures and cooling rate cannot be controlled when cooling the steel plate by a common offline heat treatment facility, the problem is that it is difficult to make a multi-phase structure.

Moreover, an issue peculiar to two-stage cooling includes the management of an intermediate temperature. Thermometers are installed on the incoming side and the outgoing side in the cooling apparatus of the steel plate, and it is common to control a cooling amount and a cooling stop temperature by setting a cooling water amount and a conveyance speed on the basis of these temperatures. On the other hand, when performing two-stage cooling by the offline heat treatment facility, it is necessary to measure the temperature of the steel plate inside the cooling apparatus in addition to the incoming-side/outgoing-side thermometers when controlling intermediate temperatures, namely, the first-stage cooling stop temperature and the second-stage cooling start temperature.

A surface temperature measuring method for a high-temperature object roughly has two methods. One method is a method of measuring the temperature by welding or contacting a temperature measuring element such as a thermocouple on the surface of a high-temperature object. The other method is a method of measuring the temperature by using a radiation thermometer configured to detect radiant energy radiated from a high-temperature object in a non-contact manner. In the former case, temperature measuring is stable and accurate, but the welding and contact of the temperature measuring element is difficult in a real process in which a temperature measuring object moves. For that reason, the surface temperature in the cooling apparatus is exclusively measured by the radiation thermometer. However, the radiation thermometer has, when water droplets or water vapor exists in the atmosphere, a drawback that the radiant energy radiated from the high-temperature object is scattered and attenuated by water vapor and thus temperature measurement accuracy decreases.

Note that "water vapor" means water particles having a diameter of several ten to several hundred µm drifting in the air. As a word indicating water particles drifting in the air, "droplet (of fine water)" is correct, and "water vapor" indicating a gas state of water is not appropriate fundamentally. However, because water vapor is common as a word indicating water particles drifting in the air in the field of temperature measurement, this is called water vapor, and atmosphere filled with water vapor is called water vapor environment.

When measuring a steel plate temperature during cooling by using the radiation thermometer, there is a method of air-purging the atmosphere as a method of preventing the influence of water vapor. PTL 7 discloses a technology of being capable of reducing the degradation of measurement accuracy due to water vapor by filling a space between a radiation thermometer and a cast slab with an air column when measuring the temperature of the cast slab by using the radiation thermometer in a secondary cooling zone of a continuous casting machine.

Moreover, when measuring the steel plate temperature during cooling by using the radiation thermometer, there is known, for example, a conventional method disclosed in PTL 8 as a method of detecting thermal radiation light radiated from the steel plate by using the radiation thermometer through purge water. A surface temperature measuring method for steel material disclosed in PTL 8 is to reduce the degradation of measurement accuracy due to water vapor by filling a space between a radiation thermometer and a steel strip with a water column when measuring the temperature of the lower surface of the hot-rolled steel strip during conveyance by using the radiation thermometer.

### Citation List

### Patent Literatures

PTL 1: JP H10-17980 A
PTL 2: JP 2015-190008 A
PTL 3: JP 2018-90872 A
PTL 4: JP H11-169941 A
PTL 5: JP H10-166023 A
PTL 6: JP 2000-42621 A
PTL 7: JP 5459459 B
PTL 8: JP 2006-17589 A

### Summary of Invention

### Technical Problem

However, in the case of the surface temperature measuring method for a cast slab disclosed in PTL 7, when a lot of water vapor is generated, it is not possible to completely remove the influence of water vapor even if the air purge is performed. For that reason, there is a problem that the measurement accuracy of surface temperature is deteriorated depending on the season and temperature. Commonly, the water temperature of the offline heat treatment facility is managed to be constant year-round to suppress a change in cooling capacity due to water temperature. For that reason, in a winter season whose room temperature is low, the inside of the cooling apparatus is filled with a large amount of water vapor generated from cooling water.

Moreover, in the case of the surface temperature measuring method for steel material disclosed in PTL 8, because a steel plate is cooled by purge water itself, the method is undesirable as a method for measuring the temperature of the upper surface of the steel plate.

The present invention has been made to solve these conventional problems. An object of the present invention is to provide a manufacturing facility and a manufacturing method for a steel plate, which can precisely manage first-stage rapid cooling and second-stage rapid cooling and manufacture a homogeneous steel plate over the whole surface of the steel plate when rapid cooling is performed on the steel plate in two stages.

### Solution to Problem

To solve the above problems, a manufacturing facility for a steel plate according to one aspect of the present invention includes a furnace configured to heat the steel plate, a cooling apparatus configured to cool the steel plate heated by the furnace, and thermometer(s) configured to measure one or both of temperatures of the steel plate on an incoming side and an outgoing side of the cooling apparatus. The cooling apparatus includes a rapid cooling area having a first rapid cooling zone in which the steel plate extracted from the furnace is rapidly cooled, an air-cooling zone in which the steel plate rapidly cooled in the first rapid cooling zone is air-cooled, and a second rapid cooling zone in which the steel plate air-cooled in the air-cooling zone is rapidly cooled. In the rapid cooling area, plural sets of upper/lower rapid cooling nozzles are arranged side by side along a conveyance direction of the steel plate, and at least one radiation thermometer provided on one side or both sides of an upper side and a lower side of the steel plate is arranged side by side along the conveyance direction of the steel plate in zones including the air-cooling zone. Temperature (s) of one or both of an upper surface and a lower surface of the steel plate is measured by the radiation thermometer arranged in the air-cooling zone.

Moreover, a manufacturing method for a steel plate according to another aspect of the present invention includes a heating step of heating the steel plate, a cooling step of cooling, by a cooling apparatus, the steel plate heated in the heating step, and a temperature measuring step of measuring, by a thermometer, one or both of temperatures of the steel plate on an incoming side and an outgoing side of the cooling step. The cooling step includes a rapid cooling step having a first rapid cooling step of rapidly cooling the steel plate heated in the heating step in a first rapid cooling zone, an air-cooling step of air-cooling the steel plate rapidly cooled in the first rapid cooling step in an air-cooling zone, and a second rapid cooling step of rapidly cooling the steel plate air-cooled in the air-cooling step in a second rapid cooling zone. In the first rapid cooling step and the second rapid cooling step, cooling water is blown onto the steel plate from plural sets of upper/lower rapid cooling nozzles arranged side by side along a conveyance direction of the steel plate. The air-cooling step includes, among at least one radiation thermometer provided on one side or both sides of an upper side and a lower side of the steel plate, which is arranged side by side along the conveyance direction of the steel plate in zones including the air-cooling zone, measuring temperature (s) of one or both of an upper surface and a lower surface of the steel plate by a radiation thermometer arranged in the air-cooling zone.

### Advantageous Effects of Invention

The manufacturing facility and the manufacturing method for the steel plate according to the present invention can precisely manage the first-stage rapid cooling and the second-stage rapid cooling and manufacture the homogeneous steel plate over the whole surface of the steel plate when rapid cooling is performed on the steel plate in two stages.

### Brief Description of Drawings

FIG. 1 is a schematic configuration diagram illustrating an offline heat treatment facility that indicates a manufacturing facility for a steel plate according to a first embodiment of the present invention;
FIGS. 2A and 2B are diagrams explaining installation height of a radiation thermometer for measurement arranged in an air-cooling zone. FIG. 2A illustrates a state where a light condensing unit of an upper-side radiation thermometer arranged on an upper side of the steel plate is arranged at a position higher than an upper end of a drainer roll. FIG. 2B illustrates a state where the light condensing unit of the upper-side radiation thermometer arranged on the upper side of the steel plate is arranged at a position lower than the upper end of the drainer roll;
FIGS. 3A to 3C are diagrams explaining a drainer mechanism at a boundary between a first rapid cooling zone and an air-cooling zone. FIG. 3A illustrates a case where the drainer mechanism is configured with a drainer roll and an air purge, FIG. 3B illustrates a case where the drainer mechanism is configured with only the drainer roll, and FIG. 3C illustrates a case where the drainer mechanism is configured with only the air purge;

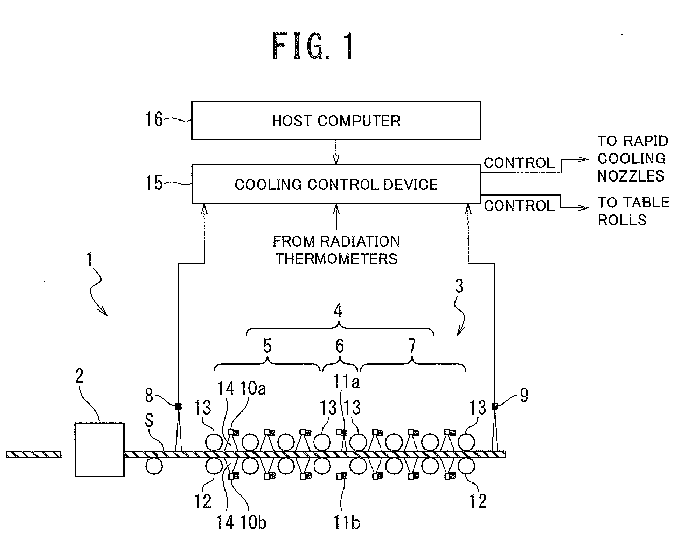

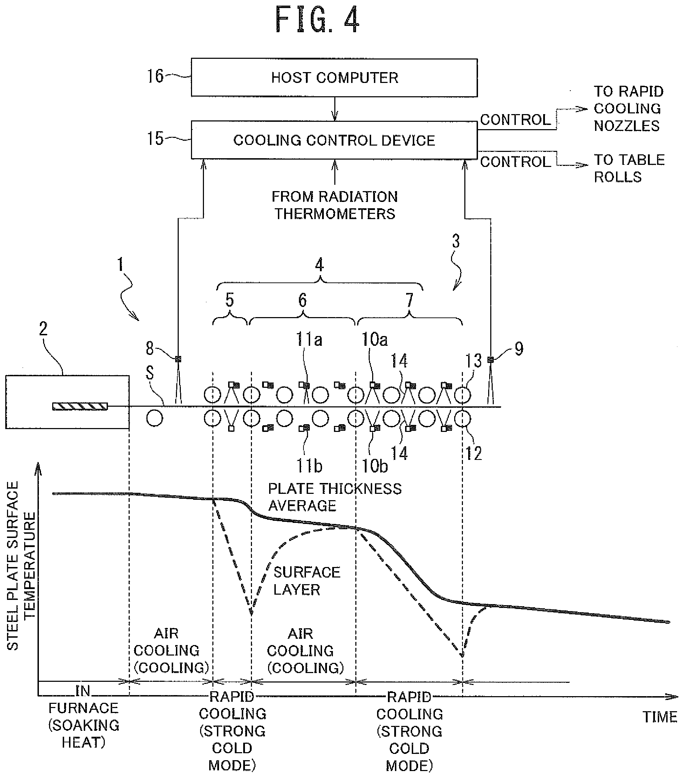

FIG. 4 is an explanatory diagram illustrating a state where, in the heat treatment facility illustrated in FIG. 1, cooling water is blown in a strong cold mode from one pair of upper/lower rapid cooling nozzles in the first rapid cooling zone and cooling water is blown in the strong cold mode from three pairs of upper/lower rapid cooling nozzles in a second rapid cooling zone. The first rapid cooling zone is a region where cooling water is blown from one pair of upper/lower rapid cooling nozzles on the most incoming side in a rapid cooling area. The air-cooling zone is a region where cooling water is not blown from three pairs of upper/lower rapid cooling nozzles on the outgoing side of one pair of upper/lower rapid cooling nozzles in the first rapid cooling zone 5. The second rapid cooling zone is a region where cooling water is blown from three pairs of upper/lower rapid cooling nozzles on the outgoing side of three pairs of upper/lower rapid cooling nozzles in the air-cooling zone. FIG. 4 also illustrates a temperature history of the plate-thickness-direction center position of the steel plate;

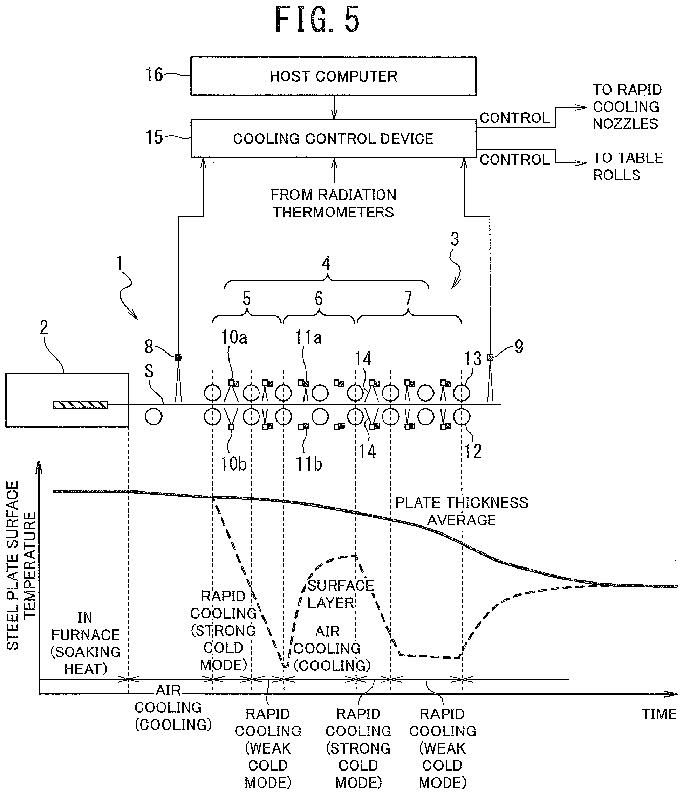

FIG. 5 is an explanatory diagram illustrating a state where, in the heat treatment facility illustrated in FIG. 1, cooling water is blown in the strong cold mode from one pair of upper/lower rapid cooling nozzles on the most incoming side in the first rapid cooling zone and cooling water is blown in a weak cold mode from one pair of upper/lower rapid cooling nozzles on the outgoing side, and cooling water is blown in the strong cold mode from one pair of upper/lower rapid cooling nozzles on the most incoming side in the second rapid cooling zone and cooling water is blown in the weak cold mode from two pairs of upper/lower rapid cooling nozzles on the outgoing side. The first rapid cooling zone is a region where cooling water is blown from two pairs of upper/lower rapid cooling nozzles on the most incoming side in the rapid cooling area. The air-cooling zone is a region where cooling water is not blown from two pairs of upper/lower rapid cooling nozzles on the outgoing side of two pairs of upper/lower rapid cooling nozzles in the first rapid cooling zone. The second rapid cooling zone is a region where cooling water is blown from three pairs of upper/lower rapid cooling nozzles on the outgoing side of two pairs of upper/lower rapid cooling nozzles in the air-cooling zone. FIG. 5 also illustrates a temperature history of the plate-thickness-direction center position of the steel plate;
FIG. 6 is a schematic configuration diagram illustrating an offline heat treatment facility that indicates a manufacturing facility for a steel plate according to a second embodiment of the present invention;
FIG. 7 is a schematic configuration diagram illustrating an offline heat treatment facility used in Examples;
FIG. 8 is a graph explaining a relationship between steel plate surface temperature and cooling time about film boiling, transition boiling, and nucleate boiling; and
FIG. 9 is a graph explaining a relationship between heat transfer coefficient and steel plate temperature about film boiling, transition boiling, and nucleate boiling.

### Description of Embodiments

Hereinafter, embodiments of the present invention will be described with reference to the accompanying drawings. Embodiments to be described below exemplify merely an apparatus and a method for embodying the technical idea of the present invention, and the technical idea of the present invention does not specify the material, shape, structure, arrangement, etc. of the component parts in the following embodiments. Moreover, the drawings are schematic. For that reason, it should be noted that a relationship between thickness and plane dimensions, a ratio, etc. are different from the actual ones, and some parts have different dimensional relationships and ratios even between the drawings.

### (First Embodiment)

FIG. 1 illustrates a schematic configuration of an offline heat treatment facility 1 that indicates a manufacturing facility for a steel plate according to the first embodiment of the present invention. The heat treatment facility 1 includes a furnace 2 configured to heat a steel plate S of 100°C or less up to a predetermined temperature in an austenite temperature region, a cooling facility 3 configured to cool the steel plate S heated by the furnace 2, an incoming-side thermometer 8, and an outgoing-side thermometer 9.

The steel plate S, which is previously hot-rolled to predetermined thickness (e.g., 80 mm) and width (e.g., 2, 000 mm) by a hot rolling line different from the heat treatment facility 1 and is cooled to room temperature, is charged into the furnace 2. The steel plate S is heated by the furnace 2 to a predetermined heating temperature (e.g., around 910°C) in the austenite temperature region.

The steel plate S extracted from the furnace 2 is cooled by the cooling apparatus 3 while being conveyed by a plurality of table rolls 12 installed on the outgoing side of the furnace 2.

The cooling apparatus 3 includes a rapid cooling area 4. The rapid cooling area 4 includes a first rapid cooling zone 5 in which the steel plate S extracted from the furnace 2 is rapidly cooled, an air-cooling zone 6 in which the steel plate S rapidly cooled in the first rapid cooling zone 5 is air-cooled, and a second rapid cooling zone 7 in which the steel plate S air-cooled in the air-cooling zone 6 is rapidly cooled.

In the rapid cooling area 4, plural sets of rapid cooling nozzles 10a and 10b forming pairs up and down with respect to a conveyance line are arranged side by side along a conveyance direction of the steel plate S. Moreover, plural sets of radiation thermometers 11a and 11b forming pairs, which are installed on at both sides of the upper side and the lower side of the steel plate S to be conveyed on the conveyance line, are arranged side by side adjacent to the rapid cooling nozzles 10a and 10b along the conveyance direction of the steel plate S.

The rapid cooling nozzles 10a and 10b in the rapid cooling area 4 operate in a strong cold mode, a weak cold mode, and a stop mode to be described later. In the strong cold mode, each of the rapid cooling nozzles 7a and 7b blows cooling water 14 onto the steel plate S by a water amount close to the maximum water amount as described later. In the weak cold mode, each of the rapid cooling nozzles 7a and 7b blows the cooling water 14 onto the steel plate S by a water amount close to the minimum water amount as described later. Moreover, in the stop mode, the blowing of the cooling water 14 from each of the rapid cooling nozzles 7a and 7b is stopped, and a section of pairs of the rapid cooling nozzles 7a and 7b that are in the stop mode forms the air-cooling zone 6.

Herein, although the heat treatment facility 1 employs an offline heat treatment facility, a cooling time from immediately after rolling to the start of cooling is longer at the tail than at the tip of the steel plate S when employing an online cooling apparatus. Assuming that the length of the steel plate S is "L" and the conveyance speed of the steel plate S is "v", a cooling time difference between the tail and tip occurs by L/v. Therefore, because the tail of the steel plate S is cooled extra by the cooling time difference even when steel plate temperature after rolling is uniform, a difference between the tip and tail in a cooling start temperature occurs, and thus the steel plate having uniform characteristics cannot be obtained over the whole surface of the steel plate S. Because a steel plate whose conveyance speed is low especially has the larger cooling time difference L/v, it can be said that a cooling start temperature difference between the tip and tail in the online cooling apparatus becomes more remarkable as the conveyance speed is slower.

In the offline heat treatment facility 1, because the steel plate is commonly conveyed at a substantially constant speed from being extracted from the furnace 2 to being cooled in a water-cooling zone (the cooling apparatus 3), a cooling start temperature difference between the tip and tail of the steel plate S is small. Assuming that a heating temperature of the steel plate S is "T0", a distance from the furnace 2 to the water-cooling zone is "L0", and a conveyance speed is "v0", the tip of the steel plate S is extracted at the temperature T0 and is cooled through a cooling time L0/v0. Because the offline heat treatment facility 1 has a short distance from the furnace 2 to the water-cooling zone, the tail of the steel plate S is kept at the temperature T0 inside the furnace even if the tip of the steel plate S is extracted from the furnace 2 and reaches cooling. For that reason, because the tail of the steel plate S is also extracted at the temperature T0 similarly to the tip and is cooled through the cooling time L0/v0, a fixed cooling start temperature can be kept over the whole length of the steel plate S. Therefore, to manufacture a homogeneous steel plate over the whole surface of a steel plate having a low conveyance speed, it is effective to employ the offline heat treatment facility 1.

In the first rapid cooling zone 5 and the second rapid cooling zone 7 of the rapid cooling area 4, high-speed cooling by nucleate boiling is performed. For that reason, the rapid cooling nozzles 7a and 7b commonly employ a slit-type nozzle or a flat spray nozzle configured to be able to uniformly blow a large flow rate of water in a width direction. However, the rapid cooling nozzles 7a and 7b may blow a large flow rate of water by porous jet flow used in the online cooling apparatus or by mist spray mainly used in continuous casting so as not to impair the effects.

To be able to correspond to all plate thicknesses of the steel plate S, a blowing water amount of the cooling water 14 in the first rapid cooling zone 5 and the second rapid cooling zone 7 can be changed. A ratio between the minimum water amount and the maximum water amount in the first rapid cooling zone 5 and the second rapid cooling zone 7 is preferably 2 or more, is more preferably around 6, and is further preferably around 10. In this regard, however, to maintain cooling by nucleate boiling, it is preferable that the minimum water flux in each of the first rapid cooling zone 5 and the second rapid cooling zone 7 is 300 L/m²·min or more. Moreover, in each of the first rapid cooling zone 5 and the second rapid cooling zone 7, it is preferable that the maximum water flux is 1000 L/m²·min or more to be able to reliably perform rapid cooling by nucleate boiling even in the steel plate having high temperature and high heat content. The maximum water flux is more preferably 1500 L/m²·min or more, and is even more preferably 2000 L/m²·min or more. On the other hand, in each of the first rapid cooling zone 5 and the second rapid cooling zone 7, a cooling rate hardly changes even if a water flux is raised when the water flux is larger than 4000 L/m²•min. Because such the water flux is not preferable from the viewpoint of economic efficiency such as the power of cooling water, the maximum water flux is preferably 4000 L/m²·min or less. After that, in each of the first rapid cooling zone 5 and the second rapid cooling zone 7, a case where blowing is performed with a water amount close to the preferable maximum water amount is referred to as a strong cold mode, and a case where blowing is performed with a water amount close to the preferable minimum flow rate is referred to as a weak cold mode.

Plural sets of the radiation thermometers 11a and 11b are installed in the rapid cooling area 4 along the conveyance direction of the steel plate S. By measuring temperatures of the upper and lower surfaces of the steel plate S by using the radiation thermometers 11a and 11b arranged in the air-cooling zone 6, water vapor or water can be prevented from intervening between the steel plate S and the radiation thermometers 11a and 11b to be able to perform reliable measurement without attenuation or scattering. As a result, it is possible to appropriately manage intermediate temperatures (cooling stop temperature in the first rapid cooling zone 5 and cooling start temperature in the second rapid cooling zone 7) to precisely manage first-stage rapid cooling and second-stage rapid cooling. Note that, by filling a space between the steel plate S and light condensing units of the radiation thermometers 11a and 11b with air at a pressure not less than atmospheric pressure, for example, by performing air purge between the steel plate S and the light condensing units of the radiation thermometers 11a and 11b, the removal of water vapor or water may be ensured.

In FIG. 1, plural sets of the radiation thermometers 11a and 11b are installed in the entire of the rapid cooling area 4 along the conveyance direction of the steel plate S, but they may be provided in only the air-cooling zone 6. Moreover, among the radiation thermometers 11a and 11b, only the radiation thermometer 11a on the upper side may be provided to measure only the upper surface of the steel plate S, or only the radiation thermometer 11b on the lower side may be provided to measure only the lower surface of the steel plate S. In FIG. 1, the radiation thermometers 11a and 11b are installed in pairs on the upper and lower sides of the steel plate S, but only the radiation thermometer 11a on the upper side is activated to measure only the upper surface of the steel plate S.

Moreover, the rapid cooling nozzles 10a and 10b do not necessarily have to be installed in the air-cooling zone 6 in which the radiation thermometers 11a and 11b for measurement are installed. However, in this case, because response cannot be made when the length of the air-cooling zone 6 is changed, it is preferable that plural sets of the rapid cooling nozzles 10a and 10b are provided along the conveyance direction of the steel plate S in the entire of the rapid cooling area 4.

It is not necessary that the radiation thermometers 11a and 11b are integrated with the rapid cooling nozzles 10a and 10b, and thus they may have a lifting/falling function independently of the rapid cooling nozzles 10a and 10b. Conversely, the facility may have a function of making the absolute height of the radiation thermometers 11a and 11b to be constant when the rapid cooling nozzles 10a and 10b lift and fall.

In the heat treatment facility 1, a drainer roll 13 acting as a drainer mechanism is provided on the most incoming side of the rapid cooling area 4 as illustrated in FIG. 1. Moreover, similarly, a drainer roll 13 acting as the drainer mechanism is provided on the most outgoing side of the rapid cooling area 4. This is to prevent the cooling water 14 from flowing out along the steel plate S to the incoming side of the apparatus and to prevent the cooling water 14 from flowing out along the steel plate S to the outgoing side of the apparatus. As a result, it is possible to prevent variation in cooling stop temperature inside the plate due to riding water onto the steel plate S that has left the rapid cooling area 4, to prevent shape degradation of the steel plate S due to ununiformity of cooling stop temperature inside or above/below the plate, and to prevent the cooling water 14 from flowing into another apparatus located on the outgoing side of the apparatus. Especially, because the influence of riding water on the cooling stop temperature is large when the cooling of the steel plate S is stopped at a temperature not less than 100°C, it is preferable to provide the drainer roll 13 on the most outgoing side of the second rapid cooling zone 7 to remove riding water onto the steel plate S that has left the rapid cooling area 4.

As illustrated in FIG. 1, drainer rolls 13 acting as the drainer mechanism are also installed between the rapid cooling nozzles 10a on the upper side in the rapid cooling area 4. As a result, for example, it is possible to stop blowing the cooling water 14 from the rapid cooling nozzles 10a and 10b on the most incoming side of the rapid cooling area 4 to shorten a rapid cooling time, and the number of pairs of the rapid cooling nozzles used in each zone can be freely set. Moreover, in the first rapid cooling zone 5 or the second rapid cooling zone 7, even when the pairs of the rapid cooling nozzles blow different water amounts, it is possible to prevent the cooling water 14 from entering another place to cool the steel plate S at an unintentional cooling rate by separating the pairs of the rapid cooling nozzles by the drainer roll 13. As a result, the temperature history of the steel plate S to be cooled is made various, and thus appropriate cooling can be performed in accordance with required characteristics.

The drainer rolls 13 are located above the respective table rolls 12, and can restrain the steel plate S of various plate thicknesses with a constant pressing force by having a lifting/falling function. It is preferable to keep the shape of the steel plate S during cooling to be flat to obtain a good draining property, and the pressing force of the drainer roll 13 is preferably 4 tons or more, is more preferably 6 tons or more, and is even more preferably 8 tons or more. Note that, when the pressing force of each of the drainer rolls 13 is too large, the drainer roll 13 may bend and a gap may occur between the steel plate S and the drainer roll 13 to deteriorate the draining property. For this reason, it is preferable that the pressing force of each of the drainer rolls 13 is 20 tons or less.

Note that it is preferable that at least the one drainer roll 13 is provided between the upper-side rapid cooling nozzle 10a on the most outgoing side in the first rapid cooling zone 5 and the radiation thermometer 11a arranged in the air-cooling zone 6 and at least the one drainer roll 13 is provided between the radiation thermometer 11a arranged in the air-cooling zone 6 and the upper-side rapid cooling nozzle 10a on the most incoming side in the second rapid cooling zone 7. As a result, it is possible to reliably suppress the leakage of the cooling water 14 to the air-cooling zone 6, and to accurately measure temperature by the radiation thermometer 11a arranged in the air-cooling zone 6.

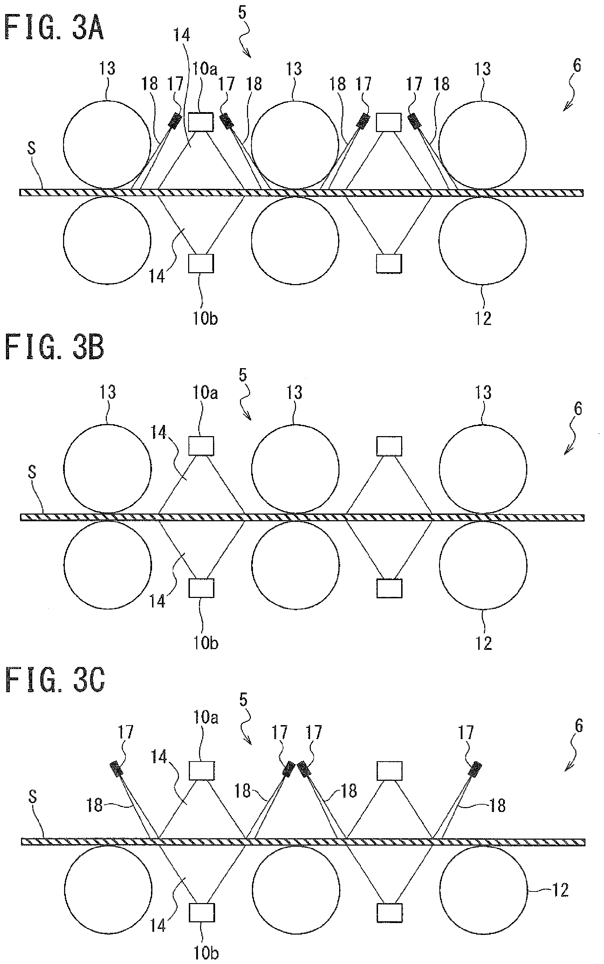

As illustrated in FIG. 3A, at a boundary between a water cooling section and an air cooling section, it is preferable that water purge 18 or air purge blown from blowing nozzles 17 is performed in addition to the drainer rolls 13 to reliably suppress the leakage of the cooling water 14 to the outside of a water-cooling applicable section. Especially, when measuring the temperature of the steel plate S in the air-cooling zone 6 next to the first rapid cooling zone 5 or the second rapid cooling zone 7 in which the steel plate S is cooled in the strong cold mode, it is preferable to use the drainer roll 13 and the water purge or the air purge to ensure that a large amount of the cooling water 14 blown in the strong cold mode stays in the applicable section.

In this regard, however, when a zone next to the zone where temperature is measured is in the air cooling or weak cold mode, only the drainer rolls 13 may be used as illustrated in FIG. 3B, or only the water purge 18 or the air purge may be used as illustrated in Fig. 3C.

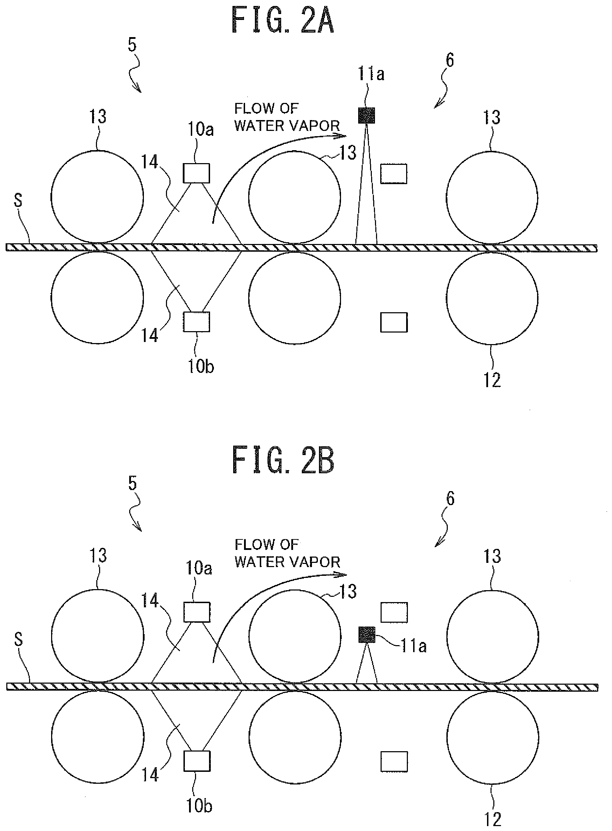

Note that, as illustrated in FIG. 2B, when the drainer mechanisms installed on the incoming side and outgoing side of the air-cooling zone 6 are the drainer rolls 13, it is preferable that the light condensing unit of the radiation thermometer 11a arranged on the upper side of the air-cooling zone 6 is arranged at a position lower than the upper end of the drainer roll 13. As illustrated in FIG. 2A, when the light condensing unit of the radiation thermometer 11a arranged on the upper side of the air-cooling zone 6 is arranged at a position higher than the upper end of the drainer roll 13, radiant energy is attenuated and scattered by water vapor flowing in from the next zone. Therefore, the arrangement of FIG. 2B is to prevent the attenuation and scattering.

As illustrated in FIG. 1, the heat treatment facility 1 further includes a cooling control device 15 configured to control cooling of the steel plate S. The cooling control device 15 is connected to the table rolls 12 conveying the steel plate S, the rapid cooling nozzles 10a and 10b, the incoming-side and outgoing-side thermometers 8 and 9, the radiation thermometers 11a and 11b, and a host computer 16.

The cooling control device 15 acquires, from the host computer 16, target ranges of a cooling start temperature, a cooling stop temperature, and an average cooling rate at the center position of plate thickness in the first rapid cooling zone 5 and the second rapid cooling zone 7, and an air-cooling time in the air-cooling zone 6, which can secure the required material characteristics. Moreover, the cooling control device 15 acquires temperatures of the steel plate S on the incoming side and outgoing side of the cooling apparatus 3 measured by the incoming-side thermometer 8 and the outgoing-side thermometer 9, and a temperature of the steel plate S measured by the radiation thermometer 11a arranged in the air-cooling zone 6. Then, the cooling control device 15 performs heat transfer calculation based on an internal model by using the acquired temperatures, and controls the number and blowing water amounts of the rapid cooling nozzles 10a and 10b used in the first rapid cooling zone 5 and the second rapid cooling zone 7, a zone length of the air-cooling zone 6, and a conveyance speed of the steel plate S. In this case, the cooling start temperature, the cooling stop temperature, and the average cooling rate at the center position of plate thickness in the first rapid cooling zone 5 and the second rapid cooling zone 7, and the air-cooling time in the air-cooling zone 6 fall within the respective target ranges. As a result, the cooling water 14 of a predetermined flow rate is blown from the rapid cooling nozzles 10a and 10b. The steel plate S is simultaneously conveyed at a predetermined conveyance speed.

For example, there is considered a case where the steel plate S is rapidly cooled and quenched.

When the plate thickness is thick (e.g., 16 mm or more), because heat conduction in the plate thickness direction requires time even if a surface temperature of the steel plate S decreases by water cooling, the center of the plate thickness is not immediately cooled and a temperature difference between the surface layer and the center becomes large. Therefore, in this case, dominant cooling is performed by heat conduction inside the steel plate S. The heat flux of strong cooling in a common steel plate water cooling process is on the order of around 10⁶ kcal/m²hr, but the heat flux of internal heat conduction is on the order of around 10⁵ kcal/m²hr. Both have a large difference. For that reason, it is preferable that the temperature of the surface layer of the steel plate S is lowered in the strong cold mode (e.g., water flux 1500 L/min•m²) of the rapid cooling area 4 and then the steel plate is cooled in the weak cold mode (e.g., water flux 300 to 800 L/min•m²) of the rapid cooling area 4.

When the plate thickness is thin (e.g., less than 16 mm) , the surface temperature of the steel plate S is decreased by water cooling and then the center of the steel plate S is immediately cooled by heat conduction in the plate thickness direction. For that reason, a temperature difference between the surface layer and the center of the steel plate S is not so large, and thus dominant cooling is performed by water-cooled heat transfer of the surface layer of the steel plate S. In the plate thickness within this range, it is preferable to blow a medium to small flow rate of water to cool the steel plate in the weak cold mode (e.g., water flux 300 to 800 L/min•m²) of the rapid cooling area 4.

The threshold of the plate thickness for switching between modes is set to 16 mm in the embodiment, but may be changed depending on target cooling start temperature, cooling stop temperature, and cooling rate in each of the first rapid cooling zone 5 and the second rapid cooling zone 7.

Moreover, in the present embodiment, switching between modes to be used focuses only on the plate thickness, but the switching between modes may be performed by other parameters (e.g., desired characteristics, yield rate, manufacturing time, plate width and plate length, etc. of the steel plate S) .

FIG. 4 illustrates a state where the cooling water 14 is blown in the strong cold mode from one pair of the upper/lower rapid cooling nozzles 10a and 10b in the first rapid cooling zone 5 and three pairs of the upper/lower rapid cooling nozzles 10a and 10b in the second rapid cooling zone 7 in the offline heat treatment facility illustrated in FIG. 1. Herein, the first rapid cooling zone 5 is a region where the cooling water 14 is blown from one pair of the upper/lower rapid cooling nozzles 10a and 10b on the most incoming side in the rapid cooling area 4. Moreover, the air-cooling zone 6 is a region where the cooling water 14 is not blown from three pairs of the upper/lower rapid cooling nozzles 10a and 10b on the outgoing side of one pair of the upper/lower rapid cooling nozzles 10a and 10b in the first rapid cooling zone 5. The second rapid cooling zone 7 is a region where the cooling water 14 is blown from three pairs of the upper/lower rapid cooling nozzles 10a and 10b on the outgoing side of three pairs of the upper/lower rapid cooling nozzles 10a and 10b in the air-cooling zone 6. A temperature history at the plate-thickness-direction center position of the steel plate S is illustrated in FIG. 4.

In a cooling pattern as illustrated in FIG. 4, to more surely remove water and water vapor, it is preferable to measure the temperature of the upper surface of the steel plate S by the radiation thermometer 11a arranged adjacent to the central rapid cooling nozzle 10a in the air-cooling zone 6. Note that the plate thickness of the steel plate S in the temperature history is assumed to be 12 mm.

FIG. 5 illustrates a state where, in the offline heat treatment facility illustrated in FIG. 1, the cooling water 14 is blown in the strong cold mode from one pair of the upper/lower rapid cooling nozzles 10a and 10b on the most incoming side and the cooling water 14 is blown in the weak cold mode from one pair of the upper/lower rapid cooling nozzles 10a and 10b on the outgoing side in the first rapid cooling zone 5. FIG. 5 simultaneously illustrates a state where the cooling water 14 is blown in the strong cold mode from one pair of the upper/lower rapid cooling nozzles 10a and 10b on the most incoming side and the cooling water 14 is blown in the weak cold mode from two pairs of the upper/lower rapid cooling nozzles 10a and 10b on the outgoing side in the second rapid cooling zone 7. Herein, the first rapid cooling zone 5 is a region where the cooling water 14 is blown from two pairs of the upper/lower rapid cooling nozzles 10a and 10b on the most incoming side in the rapid cooling area 4. Moreover, the air-cooling zone 6 is a region where the cooling water 14 is not blown from two pairs of the upper/lower rapid cooling nozzles 10a and 10b on the outgoing side of two pairs of the upper/lower rapid cooling nozzles 10a and 10b in the first rapid cooling zone 5. The second rapid cooling zone 7 is a region where the cooling water 14 is blown from three pairs of the upper/lower rapid cooling nozzles 10a and 10b on the outgoing side of two pairs of the upper/lower rapid cooling nozzles 10a and 10b in the air-cooling zone 6.

In a cooling pattern as illustrated in FIG. 5, to more surely remove water and water vapor, it is preferable to measure the temperature of the upper surface of the steel plate S by the radiation thermometer 11a arranged adjacent to the rapid cooling nozzle 10a on the incoming side among two pairs of the upper/lower rapid cooling nozzles 10a and 10b in the air-cooling zone 6. In the air-cooling zone 6, the cooling water 14 on the outgoing side of the first rapid cooling zone 5 adjacent to its incoming side is blown in the weak cold mode, but the cooling water 14 on the incoming side of the second rapid cooling zone 7 adjacent to its outgoing side is blown in the strong cold mode. Thus, water and water vapor can be reliably removed on the incoming side close to the blowing in the weak cold mode. Note that the plate thickness of the steel plate S in the temperature history is assumed to be 80 mm. It can be seen from FIG. 5 that the temperature of the surface layer of the steel plate S is decreased by cooling in the strong cold mode of the first rapid cooling zone 5 and the second rapid cooling zone 7, and a high cooling rate can be maintained inside the steel plate S even when a mode switches to the weak cold mode.

The control illustrated in FIGS. 4 and 5 is only an example, and thus the control form can be variously changed depending on target material characteristics (e.g., yield ratio and tensile strength).

Next, a manufacturing method for the steel plate of the present invention using the heat treatment facility 1 illustrated in FIG. 1 will be described.

First, the steel plate S, which is previously hot-rolled to predetermined thickness (e.g., 80mm) and width (e.g., 2000 mm) and reaches room temperature, and then from which a scale is removed, is charged into the furnace 2. Then, in the furnace 2, the steel plate S is heated up to the austenite temperature region (e.g., 910°C) (heating step).

Next, the steel plate S is extracted from the furnace 2, and is cooled in the cooling apparatus 3 while being conveyed by the plurality of table rolls 12 installed on the outgoing side of the furnace 2 (cooling step).

Prior to the cooling step, the temperature of the upper surface of the steel plate S on the incoming side of the cooling step is measured by the incoming-side thermometer 8 installed on the incoming side of the cooling apparatus 3. Moreover, after the cooling step, the temperature of the upper surface of the steel plate S on the outgoing side of the cooling step is measured by the outgoing-side thermometer 9 installed on the outgoing side of the cooling apparatus 3 (temperature measuring step).

Herein, the cooling step includes a first rapid cooling step of rapidly cooling the steel plate S heated by the heating step in the first rapid cooling zone 5, an air-cooling step of air-cooling the steel plate S rapidly cooled in the first rapid cooling step in the air-cooling zone 6, and a second rapid cooling step of rapidly cooling the steel plate S air-cooled in the air-cooling step in the second rapid cooling zone 7.

In the heat treatment facility 1 illustrated in FIG. 1, the first rapid cooling zone 5 is a region where the cooling water 14 is blown from three pairs of the upper/lower rapid cooling nozzles 10a and 10b on the most incoming side in the rapid cooling area 4. Moreover, the air-cooling zone 6 is a region where the cooling water 14 is not blown from one pair of the upper/lower rapid cooling nozzles 10a and 10b on the outgoing side of three pairs of the upper/lower rapid cooling nozzles 10a and 10b in the first rapid cooling zone 5. Moreover, the second rapid cooling zone 7 is a region where the cooling water 14 is blown from three pairs of the upper/lower rapid cooling nozzles 10a and 10b on the outgoing side of one pair of the upper/lower rapid cooling nozzles 10a and 10b in the air-cooling zone 6. However, the present embodiment will be described below as follows. The first rapid cooling zone 5 is regarded as a region where the cooling water 14 is blown from one pair of the upper/lower rapid cooling nozzles 10a and 10b on the most incoming side in the rapid cooling area 4. Moreover, the air-cooling zone 6 is regarded as a region where the cooling water 14 is not blown from one pair of the upper/lower rapid cooling nozzles 10a and 10b on the outgoing side of one pair of the upper/lower rapid cooling nozzles 10a and 10b in the first rapid cooling zone 5. Moreover, the second rapid cooling zone 7 is regarded as a region where the cooling water 14 is blown from five pairs of the upper/lower rapid cooling nozzles 10a and 10b on the outgoing side of one pair of the upper/lower rapid cooling nozzles 10a and 10b in the air-cooling zone 6.

Therefore, in the first rapid cooling step, the cooling water is blown onto the steel plate S from one pair of the upper/lower rapid cooling nozzles 10a and 10b arranged on the most incoming side along the conveyance direction of the steel plate S. Then, in the air-cooling step, the cooling water 14 is not blown from one pair of the upper/lower rapid cooling nozzles 10a and 10b on the outgoing side of one pair of the upper/lower rapid cooling nozzles 10a and 10b in the first rapid cooling zone 5. Then, in the second rapid cooling step, the cooling water 14 is blown from five pairs of the upper/lower rapid cooling nozzles 10a and 10b on the outgoing side of one pair of the upper/lower rapid cooling nozzles 10a and 10b in the air-cooling zone 6.

In the air-cooling step, the temperature of the upper surface of the steel plate S is measure by the one radiation thermometer 11a arranged in the air-cooling zone 6, among seven pairs of the radiation thermometers 11a and 11b installed on both sides of the upper and lower sides along the conveyance direction of the steel plate S in the rapid cooling area 4.

Herein, the number and blowing water amounts of the rapid cooling nozzles 10a and 10b used in the first rapid cooling step and the second rapid cooling step, the zone length of the air-cooling zone 6, and the conveyance speed of the steel plate S are controlled by the cooling control device 15. The cooling control device 15 controls, for example, the number and blowing water amounts of the rapid cooling nozzles 10a and 10b used in the first rapid cooling step described above, based on the measured temperatures. As the temperatures, there are used temperatures of the steel plate S on the incoming side and outgoing side of the cooling apparatus 3 measured by the incoming-side thermometers 8 and 9 and a temperature of the upper surface of the steel plate S measured by the radiation thermometer 11a arranged in the air-cooling zone 6. The control is performed so that a cooling start temperature, a cooling stop temperature, and an average cooling rate at the center position of plate thickness in the first rapid cooling step and the second rapid cooling step, and an air-cooling time in the air-cooling step fall within respective target ranges.

Then, the steel plate S that has undergone rapid cooling steps constituting the cooling step is provided to a subsequent step.

As a result, it is possible to manufacture the steel plate S that secures the required steel plate characteristics (e.g., yield ratio of 80% or less).

Herein, because the temperature of the upper surface of the steel plate S is measured by the radiation thermometer 11a arranged in the air-cooling zone 6, it is possible to prevent water vapor or water from intervening between the steel plate S and the radiation thermometer 11a and to perform reliable measurement without attenuation or scattering. As a result, it is possible to appropriately manage intermediate temperatures (cooling stop temperature in the first rapid cooling zone 5 and cooling start temperature in the second rapid cooling zone 7) to precisely manage the first-stage rapid cooling and the second-stage rapid cooling. For this reason, even when rapid cooling is performed in two stages on the steel plate S having a conspicuously thick plate thickness, it is possible to manufacture the homogeneous steel plate S over the whole surface of the steel plate.

Note that it is possible to check that the manufactured steel plate S satisfies required characteristics by comparing the temperatures measured by the incoming-side thermometer 8, the outgoing-side thermometer 9, and the radiation thermometer 11a with experimental data in a laboratory and manufacturing results on an actual machine. Moreover, cooling rates in the first rapid cooling step and the second rapid cooling step can be also calculated by the results of the conveyance speed of the steel plate S and the temperatures, and the required characteristics can be made more certain. Moreover, it is preferable that the temperatures and cooling rates as well as steel plate specifications (e.g., plate thickness, plate width, steel type), operating results (e.g., water temperature, air temperature, water amount), and the like are stored in the host computer 16. Thus, it is also possible to confirm the aim of the temperatures and cooling rates by taking out the stored data as reference data when cooling a steel plate having similar steel plate specifications and operating results and performing learning appropriate to a water amount of each zone accordingly. Furthermore, these data can be combined with steel plate characteristics evaluated by a material test and thus the steel plate characteristics can be fine-tuned according to the customer's request.

In the second rapid cooling step, it is preferable to activate the drainer roll 13 installed on the outgoing side of the upper-side rapid cooling nozzle 10a on the most outgoing side in the second rapid cooling zone 7 to prevent the cooling water 14 blown in the second rapid cooling zone 7 from flowing out to the outgoing side. As a result, it is possible to prevent variations in cooling stop temperature inside the plate due to riding water onto the steel plate S that has left the rapid cooling area 4. Moreover, it is possible to prevent the shape degradation of the steel plate S due to the ununiformity of cooling stop temperature inside or above/below the plate and to prevent the cooling water 14 from flowing into another apparatus located on the outgoing side of the apparatus.

In the air-cooling step, it is preferable to activate the drainer rolls 13 respectively installed between the upper-side rapid cooling nozzles 10a on the most outgoing side in the first rapid cooling zone 5 and the most incoming side in the second rapid cooling zone 7 and the radiation thermometers 11a arranged in the air-cooling zone 6. As a result, it is possible to prevent the cooling water 14 blown in the first rapid cooling zone 5 and the second rapid cooling zone 7 from flowing into near the radiation thermometer 11a arranged in the air-cooling zone 6 to accurately perform temperature measurement.

Moreover, in the air-cooling step, in a state where the light condensing unit of the radiation thermometer 11a arranged on the upper side of the air-cooling zone 6 is provided at a position lower than the upper ends of the two drainer rolls 13, it is preferable to measure the temperature of the upper surface of the steel plate S. As a result, when performing temperature measurement by the radiation thermometer 11a arranged on the upper side of the air-cooling zone 6, it is possible to prevent radiant energy from being attenuated and scattered due to water vapor flowing in from the adjacent first rapid cooling zone 5 or second rapid cooling zone 7.

Furthermore, in the air-cooling step, in a state where a space between the steel plate S and the light condensing unit of the radiation thermometer 11a arranged in the air-cooling zone 6 is filled with air at a pressure not less than atmospheric pressure, it is preferable to measure the temperature of the upper surface of the steel plate S. As a result, when performing temperature measurement by the radiation thermometer 11a, the removal of water vapor or water can be ensured.

Moreover, it is preferable that blowing water amounts of the cooling water in the first rapid cooling step and the second rapid cooling step can be changed, a ratio between the minimum water amount and the maximum water amount that can be blown is 2 or more, and the maximum water flux is 1000 L/m²·min or more and the minimum water flux is 300 L/m²·min or more.

### (Second Embodiment)

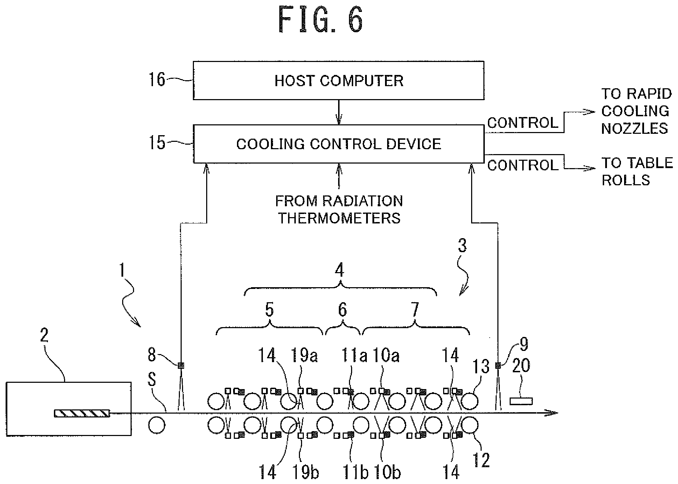

FIG. 6 illustrates a schematic configuration of an offline heat treatment facility that indicates a manufacturing facility for a steel plate according to the second embodiment of the present invention. The basic configuration is similar to the heat treatment facility 1 illustrated in FIG. 1, but nozzles 19a and 19b that can blow a water amount (e.g., low flow rate such as 30 to 200 L/m²•min) other than the set water amount in the rapid cooling area 4 are further provided at positions adjacent to one pair of the upper/lower rapid cooling nozzles 10a and 10b in the rapid cooling area 4.

As a result, it is possible to appropriately select one of rapid cooling and another cooling to cool the steel plate S in accordance with the target characteristics of the steel plate S.

Moreover, in the heat treatment facility 1 illustrated in FIG. 6, a steel plate shapemeter 20 is provided on the outgoing side of the cooling apparatus 3. As a result, it is possible to control the setting patterns of a water amount and a conveyance speed from the front material or the steel plate shape of the past steel plate S in a feedback manner to improve the shape of the steel plate S.

As described above, the embodiments of the present invention have been described, but the present invention is not limited to the embodiments and various changes and improvements can be performed.

For example, the heat treatment facility 1 illustrated in FIGS. 1 and 4 to 6 is an offline heat treatment facility, but the present invention may be applied to an online cooling apparatus. Because the offline heat treatment facility requires additional steps compared to the online cooling apparatus, the offline heat treatment facility takes high time and monetary costs. Moreover, productivity may be impaired by the conveyance of the plate, etc. For that reason, in the case of a material having normal plate thickness instead of cooling the steel plate S having extremely thick plate thickness described in the present invention, because a conveyance speed becomes fast and thus cooling start temperatures at the tip and tail of the steel plate S are hard to have a difference, it is rather preferable to use an online cooling apparatus.

On the other hand, even when using the online cooling apparatus, it is clear to require the management of intermediate temperature during two-stage cooling, and thus it is obvious that the steel plate S can be manufactured by using the technology described in the present invention without change.

Moreover, in the heat treatment facility 1 illustrated in FIGS. 1 and 4 to 6, the radiation thermometers 11a and 11b are installed on both of the upper and lower sides of the steel plate S, but they may be installed on only the upper side or only the lower side of the steel plate S. Moreover, in the heat treatment facility 1 illustrated in FIGS. 1 and 4 to 6, the lower-side radiation thermometer 11b may measure only the temperature of the lower surface of the steel plate S, or the radiation thermometers 11a and 11b on both of the upper and lower sides may measure the temperatures of both of the upper and lower surfaces of the steel plate S.

Moreover, the incoming-side thermometer 8 is provided on the incoming side and the outgoing-side thermometer 9 is provided on the outgoing side of the cooling apparatus 3, but only one of them may be provided to measure one of the temperatures of the steel plate S on the incoming side and outgoing side.

### Examples

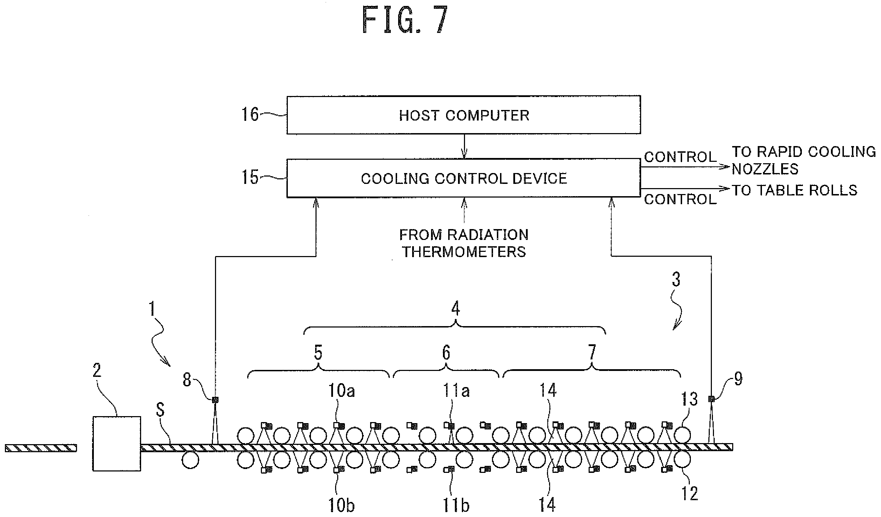

In the heat treatment facility 1 illustrated in FIG. 7, the steel plate S in a room temperature state from which a scale has been previously removed by shot blasting was heated to 900°C in the furnace 2 under a nitrogen atmosphere. After that, the steel plate S was cooled in the cooling apparatus 3 located 2.0 m away from the furnace 2 to manufacture construction steel having a low yield ratio. The component composition of the steel plate S has, by mass %, C: 0.061%, Si: 0.07%, Mn: 1.98%, P: 0.007%, S: 0.0008%, Al: 0.03%, Cu: 0.33%, Ni: 1.01%, Cr: 0.34%, Mo: 1.50%, Nb: 0.010%, V: 0.04%, Ti: 0.012%, and N: 0.0042%, and further has Fe and inevitable impurity as a remainder.

In the heat treatment facility 1 illustrated in FIG. 7, a scanning radiation thermometer is installed as the incoming-side thermometer 8 between the furnace 2 and the cooling apparatus 3, and a scanning radiation thermometer is installed as the outgoing-side thermometer 9 on the outgoing side of 5.0 m of the cooling apparatus 3. Moreover, in the rapid cooling area 4 of the cooling apparatus 3, the radiation thermometer 11a is installed near the upper-side rapid cooling nozzle 10a.

In Examples 1 and 2, when cooling the steel plate S, the drainer roll 13 on the outgoing side in the second rapid cooling zone 7, the drainer roll 13 on the outgoing side in the first rapid cooling zone 5, and the drainer roll 13 on the incoming side in the second rapid cooling zone 7 were activated. Moreover, various controls were performed based on the temperature of the steel plate S measured by the incoming-side thermometer 8, the temperature of the steel plate S measured by the outgoing-side thermometer 9, and the temperature of the upper surface of the steel plate S measured by the radiation thermometer 11a arranged in the air-cooling zone 6. In other words, the number and blowing water amounts of the rapid cooling nozzles 10a and 10b used in the first rapid cooling step and the second rapid cooling step, the zone length of the air-cooling zone 6, and the conveyance speed of the steel plate S were controlled to achieve the following temperature conditions: a cooling start temperature in the first rapid cooling step: the Ar3 transformation point or more; a cooling stop temperature in the first rapid cooling step: 400 to 550°C; an average cooling rate at the center position of plate thickness in the first rapid cooling step: 1 to 200°C/s; an air-cooling time in the air-cooling step: 30 to 300 s; a cooling stop temperature in the second rapid cooling step: 300°C or less; and an average cooling rate at the center position of plate thickness in the second rapid cooling step: 1 to 200°C/s. In Example 1, all blowing water amounts of the rapid cooling nozzles 10a and 10b used in the first rapid cooling step and the second rapid cooling step were set to amounts in the strong cold mode. In Example 2, blowing water amounts of the rapid cooling nozzles 10a and 10b used in each of the first rapid cooling step and the second rapid cooling step were set to amounts in both modes of the strong cold mode and the weak cold mode, and those of the rapid cooling nozzles 10a and 10b on the outgoing side were set to amounts in the weak cold mode.

In Comparative Example 1, when cooling the steel plate S, the drainer roll 13 on the outgoing side in the second rapid cooling zone 7, the drainer roll 13 on the outgoing side in the first rapid cooling zone 5, and the drainer roll 13 on the incoming side in the second rapid cooling zone 7 were not activated. Moreover, without managing intermediate temperatures (cooling stop temperature in the first rapid cooling step and cooling start temperature in the second rapid cooling step), various controls were performed based on the temperature of the steel plate S measured by the incoming-side thermometer 8 and the temperature of the steel plate S measured by the outgoing-side thermometer 9. In other words, the number and blowing water amounts of the rapid cooling nozzles 10a and 10b used in the first rapid cooling step and the second rapid cooling step, the zone length of the air-cooling zone 6, and the conveyance speed of the steel plate S were controlled to achieve the following temperature conditions: a cooling start temperature in the first rapid cooling step: the Ar3 transformation point or more; and a cooling stop temperature in the second rapid cooling step: 300°C or less. In Comparative Example 1, all blowing water amounts of the rapid cooling nozzles 10a and 10b used in the first rapid cooling step and the second rapid cooling step were set to amounts in the strong cold mode.

In Comparative Example 2, when cooling the steel plate S, the drainer roll 13 on the outgoing side in the first rapid cooling zone 5 and the drainer roll 13 on the incoming side in the second rapid cooling zone 7 were not activated. Moreover, without managing intermediate temperatures, various controls were performed based on the temperature of the steel plate S measured by the incoming-side thermometer 8 and the temperature of the steel plate S measured by the outgoing-side thermometer 9. In other words, the number and blowing water amounts of the rapid cooling nozzles 10a and 10b used in the first rapid cooling step and the second rapid cooling step, the zone length of the air-cooling zone 6, and the conveyance speed of the steel plate S were controlled to achieve the following temperature conditions : a cooling start temperature in the first rapid cooling step: the Ar3 transformation point or more; and a cooling stop temperature in the second rapid cooling step: 300°C or less. In
Comparative Example 2, all blowing water amounts of the rapid cooling nozzles 10a and 10b used in the first rapid cooling step and the second rapid cooling step were set to amounts in the strong cold mode.

In Comparative Examples 3 to 5, when cooling the steel plate S, the drainer roll 13 on the outgoing side in the second rapid cooling zone 7, the drainer roll 13 on the outgoing side in the first rapid cooling zone 5, and the drainer roll 13 on the incoming side in the second rapid cooling zone 7 were activated. Moreover, when cooling the steel plate S, without managing intermediate temperatures, various controls were performed based on the temperature of the steel plate S measured by the incoming-side thermometer 8 and the temperature of the steel plate S measured by the outgoing-side thermometer 9. In other words, the number and blowing water amounts of the rapid cooling nozzles 10a and 10b used in the first rapid cooling step and the second rapid cooling step, the zone length of the air-cooling zone 6, and the conveyance speed of the steel plate S were controlled to achieve the following temperature conditions: a cooling start temperature in the first rapid cooling step: the Ar3 transformation point or more; an air-cooling time in the air-cooling step: 30 to 300 s; and a cooling stop temperature in the second rapid cooling step: 300°C or less. In

Comparative Example 3, all blowing water amounts of the rapid cooling nozzles 10a and 10b used in the first rapid cooling step were set to amounts in the weak cold mode, and all blowing water amounts of the rapid cooling nozzles 10a and 10b used in the second rapid cooling step were set to amounts in the strong cold mode. Moreover, in Comparative Example 4, all blowing water amounts of the rapid cooling nozzles 10a and 10b used in the first rapid cooling step and the second rapid cooling step were set to amounts in the strong cold mode. Furthermore, in Comparative Example 5, blowing water amounts of the rapid cooling nozzles 10a and 10b used in the first rapid cooling step were set to amounts in both modes of the strong cold mode and the weak cold mode, and blowing water amounts of the rapid cooling nozzles 10a and 10b used in the second rapid cooling step were set to amounts in the strong cold mode.

For each of Examples 1 and 2 and Comparative Examples 1 to 5, a temperature history at the center of the plate thickness was calculated by back-calculating a heat conduction equation with a computer. The temperature of the steel plate S measured by the incoming-side thermometer 8, the temperature of the steel plate S measured by the outgoing-side thermometer 9, and the temperature of the upper surface of the steel plate S measured by the radiation thermometer 11a arranged in the air-cooling zone 6 were used for the back calculation process. Moreover, cooling start temperatures and cooling stop temperatures in the first rapid cooling step and cooling stop temperatures in the second rapid cooling step were calculated from the calculated temperature history at the center of the plate thickness. Furthermore, cooling rates at the center of the plate thickness in each of the first rapid cooling step and the second rapid cooling step were calculated from the calculated temperature at the center of the plate thickness, the set conveyance speed of the steel plate S, and the total zone length used for rapid cooling. Moreover, air-cooling times were calculated from the set conveyance speed of the steel plate S and the zone length of the air-cooling zone 6.

Moreover, for each of Examples 1 and 2 and Comparative Examples 1 to 5, a width-direction temperature deviation at the longitudinal position of the steel plate S was measured by a scanning radiation thermometer provided as the outgoing-side thermometer 9 on the outgoing side of the cooling apparatus 3 to obtain a surface temperature distribution of the steel plate S. A value obtained by subtracting the minimum value from the maximum value of the surface temperature was evaluated as a temperature deviation value.

Moreover, mechanical characteristics of the steel plate S cooled under cooling conditions of each of Examples 1 and 2 and Comparative Examples 1 to 5 were evaluated. A JIS No. 4 tensile test piece was picked from the central position (1/2 of plate thickness) of the plate thickness of the steel plate S, a tensile test based on regulations of JIS Z2241 was performed on it, and a tensile strength (TS), a yield strength (YS), and a yield ratio (YR) were evaluated. In this case, when TS is 780 MPa or more, YS is 630 MPa or more, and YR is 80% or less, the test piece was a pass.

Moreover, a V-notch test piece based on regulations of JIS Z2202 was picked from the central position of the plate thickness of the steel plate S, a Charpy impact test based on regulations of JIS Z2242 was performed on it, and Charpy absorption energy (vE0) at 0°C was evaluated. When the Charpy absorption energy (vE0) at 0°C is 100 J or more, the test piece was a pass.

Evaluation results are indicated in Table 1.

**Table 1**

| | Plate thickness | Drainer roll activation | | Intermediate temperature management | First rapid cooling | | | | | Air cooling | Second rapid cooling | | | | Temperature deviation | YS | TS | YR | vE₀ |
|---|---|---|---|---|---|---|---|---|---|---|---|---|---|---|---|---|---|---|---|
| | | Outgoing side of 2nd rapid cooling | Outgoing side of 1st rapid cooling & Incoming side of 2nd rapid cooling | | Number of strong cold nozzles | Number of weak cold nozzles | Cooling start temperature | Cooling stop temperature | Cooling rate at center of plate thickness | Air cooling time | Number of strong cold nozzles | Number of weak cold nozzles | Cooling stop temperature | Cooling rate at center of plate thickness | | | | | |
| Example 1 | 80 | Yes | Yes | Yes | 5 | 0 | 872 | 527 | 6.7 | 56 | 3 | 0 | 235 | 5.4 | 18 | 672 | 871 | 77.2 | 165 |
| Example 2 | 80 | Yes | Yes | Yes | 2 | 3 | 867 | 466 | 5.5 | 68 | 1 | 2 | 236 | 4.3 | 10 | 655 | 843 | 77.7 | 171 |
| Comp. Ex. 1 | 80 | No | No | No | 5 | 0 | 862 | Uncertain | Uncertain | Uncertain | 3 | 0 | 100 | Uncertain | 182 | 685 | 880 | 77.8 | 134 |
| Comp. Ex. 2 | 80 | Yes | No | No | 5 | 0 | 868 | Uncertain | Uncertain | Uncertain | 3 | 0 | 240 | Uncertain | 15 | 682 | 792 | 86.1 | 140 |
| Comp. Ex. 3 | 80 | Yes | Yes | No | 0 | 5 | 859 | (655) | (2.9) | 108 | 2 | 0 | 244 | (5.7) | 18 | 612 | 801 | 76.4 | 82 |
| Comp. Ex. 4 | 80 | Yes | Yes | No | 2 | 0 | 865 | (639) | (8.8) | 93 | 4 | 0 | 246 | (5.6) | 16 | 634 | 773 | 82 | 76 |
| Comp. Ex. 5 | 80 | Yes | Yes | No | 4 | 3 | 869 | (357) | (5.2) | 65 | 1 | 0 | 240 | (6.7) | 17 | 607 | 860 | 70.6 | 42 |

In Examples 1 and 2, the calculated cooling start temperatures and cooling stop temperatures in the first rapid cooling step and the second rapid cooling step, cooling rates at the center of the plate thickness in each of the first rapid cooling step and the second rapid cooling step, and air-cooling times were within the target temperature ranges. Moreover, width-direction temperature deviations at the surface temperature of the steel plate S were also small, and tensile strength (TS), yield strength (YS), yield ratio (YR), and Charpy absorption energy (vE0) at 0°C were a Pass.

Moreover, in Example 2, because the rapid cooling nozzles 10a and 10b on the outgoing sides in the first rapid cooling zone 5 and the second rapid cooling zone 7 were set to nozzles in the weak cold mode, draining on the outgoing side became easier and a width-direction temperature deviation was improved compared to Example 1.

In Comparative Example 1, because the drainer rolls 13 on the outgoing side of the first rapid cooling zone 5 and the incoming side of the second rapid cooling zone 7 were not activated, cooling water leaked to the air-cooling zone 6 side. For that reason, a cooling stop temperature in the first rapid cooling step, a cooling rate at the center of the plate thickness in each of the first rapid cooling step and the second rapid cooling step, and an air-cooling time cannot be calculated, and these were uncertain. Moreover, because the drainer roll 13 on the outgoing side in the second rapid cooling zone 7 was not activated, a width-direction temperature deviation at the surface temperature of the steel plate S has become large. Because draining is not performed on the outgoing side of the second rapid cooling zone 7, it is considered that cooling water flows out to the outgoing side of the second rapid cooling zone 7 and water is on the steel plate S even on the outgoing side of the cooling apparatus 3.

In Comparative Example 2, because the drainer rolls 13 on the outgoing side of the first rapid cooling zone 5 and the incoming side of the second rapid cooling zone 7 were not activated, cooling water leaked to the air-cooling zone 6 side. For that reason, a cooling stop temperature in the first rapid cooling step, a cooling rate at the center of the plate thickness in each of the first rapid cooling step and the second rapid cooling step, and an air-cooling time cannot be calculated, and these were uncertain. Moreover, because the cooling water leaked to the air-cooling zone 6, it is considered that an air-cooling time was shortened. As a result, because a bainite transformation rate became insufficient and an island-shaped martensite was not obtained, YR of the steel plate S was Fail.

In Comparative Example 3, the temperature of the steel plate S was not measured by the radiation thermometer 11a arranged in the air-cooling zone 6, and intermediate temperatures were not managed. For this reason, the calculated cooling stop temperature in the first rapid cooling step, and the cooling rate at the center of the plate thickness in each of the first rapid cooling step and the second rapid cooling step were out of the target ranges, and YS and vE0 of the steel plate S were Fail.

Moreover, in Comparative Example 4, the temperature of the steel plate S was not measured by the radiation thermometer 11a arranged in the air-cooling zone 6, and intermediate temperatures (cooling stop temperature in the first rapid cooling step and cooling start temperature in the second rapid cooling step) were not managed. For this reason, the calculated cooling stop temperature in the first rapid cooling step, and the cooling rate at the center of the plate thickness in each of the first rapid cooling step and the second rapid cooling step were out of the target ranges, and TS, YR, and vE0 of the steel plate S were Fail.

In Comparative Example 5, the temperature of the steel plate S was not measured by the radiation thermometer 11a arranged in the air-cooling zone 6, and intermediate temperatures were not managed. For this reason, the calculated cooling stop temperature in the first rapid cooling step, and the cooling rate at the center of the plate thickness in each of the first rapid cooling step and the second rapid cooling step were out of the target ranges, and YS and vE0 of the steel plate S were Fail.

If the number and blowing water amounts of the rapid cooling nozzles 10a and 10b used in the first rapid cooling step and the second rapid cooling step, the zone length of the air-cooling zone 6, and the conveyance speed are the same as those of Examples 1 and 2 under the same conditions as in Comparative Examples 3 to 5, it is estimated that the steel plate S having the same characteristics as those of Examples 1 and 2 can be manufactured. However, when intermediate temperatures are not measured (when the temperature of the steel plate S is not measured by the radiation thermometer 11a arranged in the air-cooling zone 6), the cooling stop temperature in the first rapid cooling step and the cooling start temperature in the second rapid cooling step cannot be appropriately controlled. For that reason, to check that the steel plate S satisfies required characteristics, there is only the choice to perform a material evaluation test to evaluate characteristics each time. Moreover, to cope with seasonal changes in water temperature and changes due to aging of the facility, it is necessary to evaluate and learn cooling capacity by performing intermediate temperature measurement each time.

Therefore, in manufacturing the steel plate S when intermediate temperatures are not measured, productivity is extremely low or quality control status is bad even if the temperature history matches accidentally. When the cooling start temperature, the cooling stop temperature, and the cooling rate are controlled in each of the first-stage rapid cooling and the second-stage rapid cooling in the case of two-stage rapid cooling with respect to the steel plate S, it is required to measure intermediate temperatures and to adjust water amounts as in the present invention.

### Reference Signs List

- 1: heat treatment facility
- 2: furnace
- 3: cooling apparatus
- 4: rapid cooling area
- 5: first rapid cooling zone
- 6: air-cooling zone
- 7: second rapid cooling zone
- 8: incoming-side thermometer (thermometer)
- 9: outgoing-side thermometer
- 10a, 10b: rapid cooling nozzle
- 11a, 11b: radiation thermometer
- 12: table roll
- 13: drainer roll (drainer mechanism)
- 14: cooling water
- 15: cooling control device
- 16: host computer
- 17: blowing nozzle
- 18: water purge
- 19a, 19b: nozzle
- 20: steel plate shapemeter
- S: steel plate

## Claims

1. A manufacturing facility for a steel plate, the manufacturing facility comprising:
a furnace configured to heat the steel plate;
a cooling apparatus configured to cool the steel plate heated by the furnace; and
thermometer(s) configured to measure one or both of temperatures of the steel plate on an incoming side and an outgoing side of the cooling apparatus, wherein
the cooling apparatus comprises a rapid cooling area having a first rapid cooling zone in which the steel plate extracted from the furnace is rapidly cooled, an air-cooling zone in which the steel plate rapidly cooled in the first rapid cooling zone is air-cooled, and a second rapid cooling zone in which the steel plate air-cooled in the air-cooling zone is rapidly cooled,
in the rapid cooling area, plural sets of upper/lower rapid cooling nozzles are arranged side by side along a conveyance direction of the steel plate, and at least one radiation thermometer provided on one side or both sides of an upper side and a lower side of the steel plate is arranged side by side along the conveyance direction of the steel plate in zones including the air-cooling zone, and
temperature (s) of one or both of an upper surface and a lower surface of the steel plate is measured by the radiation thermometer arranged in the air-cooling zone.

2. The manufacturing facility for the steel plate according to claim 1, wherein, among the rapid cooling nozzles,
a drainer mechanism is provided on an outgoing side of an upper-side rapid cooling nozzle on a most outgoing side of the second rapid cooling zone, and
at least one drainer mechanism is provided between an upper-side rapid cooling nozzle on a most outgoing side of the first rapid cooling zone and the radiation thermometer for measurement arranged in the air-cooling zone, and at least one drainer mechanism is provided between the radiation thermometer for measurement arranged in the air-cooling zone and an upper-side rapid cooling nozzle on a most incoming side of the second rapid cooling zone.

3. The manufacturing facility for the steel plate according to claim 2, wherein each of the drainer mechanisms includes one or more of a drainer roll, air purge, and water purge.

4. The manufacturing facility for the steel plate according to claim 2, wherein
each of the drainer mechanisms provided between the upper-side rapid cooling nozzle on the most outgoing side of the first rapid cooling zone and the radiation thermometer for measurement arranged on an upper side of the air-cooling zone and between the radiation thermometer for measurement arranged on the upper side of the air-cooling zone and the upper-side rapid cooling nozzle on the most incoming side of the second rapid cooling zone includes a drainer roll, and
a light condensing unit of the radiation thermometer for measurement arranged on the upper side of the air-cooling zone is arranged at a position lower than an upper end of the drainer roll.

5. The manufacturing facility for the steel plate according to any one of claims 1 to 4, further comprising:
a mechanism configured to fill a space between the steel plate and a(the) light condensing unit of the radiation thermometer for measurement arranged in the air-cooling zone is filled with air at a pressure not less than atmospheric pressure.

6. The manufacturing facility for the steel plate according to any one of claims 1 to 5, wherein
blowing water amounts of cooling water in the first rapid cooling zone and the second rapid cooling zone are changeable,
a ratio between a minimum water amount and a maximum water amount of the cooling water that can be blown is 2 or more, and
a maximum water flux is 1000 L/m²•min or more and a minimum water flux of the cooling water is 300 L/m²•min or more.

7. The manufacturing facility for the steel plate according to any one of claims 1 to 6, further comprising:
a cooling control device configured to control a number and blowing water amounts of the rapid cooling nozzles used in the first rapid cooling zone, a zone length of the air-cooling zone, a number and blowing water amounts of the rapid cooling nozzles used in the second rapid cooling zone, and a conveyance speed of the steel plate, based on measured value (s) of one or both of the temperatures of the steel plate on the incoming side and the outgoing side of the cooling apparatus measured by the thermometer and measured value(s) of the temperature (s) of one or both of the upper surface and the lower surface of the steel plate measured by the radiation thermometer, in such a manner that a cooling start temperature, a cooling stop temperature, and an average cooling rate at a center position of plate thickness in the first rapid cooling zone, an air cooling time in the air-cooling zone, and a cooling start temperature, a cooling stop temperature, and an average cooling rate at the center position of plate thickness in the second rapid cooling zone fall within respective target ranges.

8. A manufacturing method for a steel plate, the method comprising:
a heating step of heating the steel plate;
a cooling step of cooling, by a cooling apparatus, the steel plate heated in the heating step; and
a temperature measuring step of measuring, by a thermometer, one or both of temperatures of the steel plate on an incoming side and an outgoing side of the cooling step, wherein
the cooling step comprises a rapid cooling step having a first rapid cooling step of rapidly cooling the steel plate heated in the heating step in a first rapid cooling zone, an air-cooling step of air-cooling the steel plate rapidly cooled in the first rapid cooling step in an air-cooling zone, and a second rapid cooling step of rapidly cooling the steel plate air-cooled in the air-cooling step in a second rapid cooling zone,
in the first rapid cooling step and the second rapid cooling step, cooling water is blown onto the steel plate from plural sets of upper/lower rapid cooling nozzles arranged side by side along a conveyance direction of the steel plate, and
the air-cooling step comprises, among at least one radiation thermometer provided on one side or both sides of an upper side and a lower side of the steel plate, which is arranged side by side along the conveyance direction of the steel plate in zones including the air-cooling zone, measuring temperature (s) of one or both of an upper surface and a lower surface of the steel plate by a radiation thermometer arranged in the air-cooling zone.

9. The manufacturing method for the steel plate according to claim 8, wherein the air-cooling step comprises activating, among the rapid cooling nozzles, at least one drainer mechanism provided between an upper-side rapid cooling nozzle on a most outgoing side of the first rapid cooling zone and the radiation thermometer for measurement arranged in the air-cooling zone and at least one drainer mechanism provided between the radiation thermometer for measurement arranged in the air-cooling zone and an upper-side rapid cooling nozzle on a most incoming side of the second rapid cooling zone, to prevent cooling water blown in the first rapid cooling zone and cooling water blown in the second rapid cooling zone from flowing into near the radiation thermometer for measurement arranged in the air-cooling zone.

10. The manufacturing method for the steel plate according to claim 9, wherein the activating comprises activating, when cooling is stopped at 100°C or more of an average temperature of plate thickness of the steel plate on an outgoing side of the second rapid cooling step, a drainer mechanism provided on an outgoing side of an upper-side rapid cooling nozzle on a most outgoing side of the second rapid cooling zone, to prevent the cooling water blown in the second rapid cooling zone from flowing out to an outgoing side of the second rapid cooling zone.

11. The manufacturing method for the steel plate according to claim 9 or 10, wherein the air-cooling step comprises, in a state where a light condensing unit of the radiation thermometer for measurement arranged in the air-cooling zone is provided at a position lower than an upper end of each of the drainer mechanisms provided between the upper-side rapid cooling nozzle on the most outgoing side of the first rapid cooling zone and the radiation thermometer for measurement arranged in the air-cooling zone and between the radiation thermometer for measurement arranged in the air-cooling zone and the upper-side rapid cooling nozzle on the most incoming side of the second rapid cooling zone, measuring the temperature(s) of one or both of the upper surface and the lower surface of the steel plate.

12. The manufacturing method for the steel plate according to any one of claims 9 to 11, wherein the air-cooling step comprises, in a state where a space between the steel plate and a(the) light condensing unit of the radiation thermometer for measurement arranged in the air-cooling zone is filled with air at a pressure not less than atmospheric pressure, measuring the temperature (s) of one or both of the upper surface and the lower surface of the steel plate.

13. The manufacturing method for the steel plate according to any one of claims 8 to 12, wherein
blowing water amounts of cooling water in the first rapid cooling step and the second rapid cooling step are changeable,
a ratio between a minimum water amount and a maximum water amount of the cooling water that can be blown is 2 or more, and
a maximum water flux is 1000 L/m²•min or more and a minimum water flux of the cooling water is 300 L/m²•min or more.

14. The manufacturing method for the steel plate according to any one of claims 8 to 13, further comprising:
controlling, by a cooling control device, a number and blowing water amounts of the rapid cooling nozzles used in the first rapid cooling step, a zone length of the air-cooling zone, a number and blowing water amounts of the rapid cooling nozzles used in the second rapid cooling step, and a conveyance speed of the steel plate, based on measured value (s) of one or both of the temperatures of the steel plate on the incoming side and the outgoing side of the cooling apparatus measured by the thermometer and measured value(s) of the temperature (s) of one or both of the upper surface and the lower surface of the steel plate measured by the radiation thermometer, in such a manner that a cooling start temperature, a cooling stop temperature, and an average cooling rate at a center position of plate thickness in the first rapid cooling step, an air cooling time in the air-cooling step, and a cooling start temperature, a cooling stop temperature, and an average cooling rate at the center position of plate thickness in the second rapid cooling step fall within respective target ranges.
